# EUROPEAN PATENT SPECIFICATION

(11) **EP 0 434 422 B1**
(45) Date of publication and mention of the grant of the patent: **12.04.1995**
(21) Application number: 90314006.9
(22) Date of filing: 20.12.1990
(51) Int. Cl.: B41F 17/10, G01B 3/10

(54) **Manufacture of tape measures**
Herstellung von Messbändern
Fabrication de mètre-rubans

(30) Priority: 20.12.1989 GB 8928743
(43) Date of publication of application: 26.06.1991
(73) Proprietor: FISCO PRODUCTS LIMITED, Rayleigh Essex SS6 7XD (GB)
(72) Inventor: Cattel, Roy, Eastwood, Essex SS9 5UD (GB); Cornish, Carl, Chelmsford, Essex CM1 5TN (GB); Butcher, John, Rayleigh, Essex SS6 7SX (GB)
(74) Representative: Ford, Michael Frederick

(56) References cited:
- EP-A- 0 160 271
- GB-A- 2 078 208
- US-A- 2 471 395
- US-A- 4 007 866
- US-A- 4 029 006
- US-A- 4 705 415

## Description

This invention relates to the production of measuring tapes. Currently the graduations on measuring tapes are printed onto the tapes. Accuracy of printing imposes a very severe demand on the printing process. Every graduation must of course be in its correct position, requiring precise positioning over a length which may be many metres.

In conventional printing technology accurate positioning of all parts of a single colour printed image is accomplished by printing the entire image from a single plate. The plate thus positions every part of a single impression. Adjustments and control mechanisms on the printing press may be utilised to effect registration of one colour with another and/or between each impression and the substrate which receives the print. However, it is the plate itself which positions every part of a single impression of a single colour.

For measuring tapes this conventional approach is implemented by printing all the graduations in a single colour using a flexible printing plate which is in the form of a long endless belt. The numerals may be printed in a second colour with a second such belt.

It is our experience that the production of a measuring tape by printing from a single plate (in the form of a belt) does not guarantee accurate positioning of all the graduations. Experience shows that some slip occurs between the strip which is being printed and the plate. This is so small that it does not smudge the image in any noticeable way, yet it can build up over the length of a tape into an observable inaccuracy.

This small amount of slip can be overcome or compensated for by adjusting the tension in the strip material as it is being printed. However, it is necessary to carry out trial-and-error setting up procedure during which sample tapes are printed, checked for accuracy, and thrown away if not accurate.

It is not apparent that substitution of some other printing techniques could change this situation.

We have now appreciated that it would be both possible and advantageous to print gradations onto a measuring tape by means of an ink jet printer, relying on accuracy of control to achieve the required accuracy of positioning along the length of the tape. EP-A-160271 discloses the printing of measuring tapes by ink-jet printing. It is stated that either the rate of transport of the tape or the operating rate of the printer should be controlled in order to synchronise transport and printing. Further details of control arrangements are not given.

More specifically, one aspect of this invention provides a process for printing graduations onto a measuring tape comprising passing an elongate strip through a printing station having a support over which the strip passes, means to hold the strip taut as it passes over the support and means for monitoring the amount of motion of the strip, monitoring and regulating the tension in the strip passing over the support, delivering print onto the strip by at least one ink jet printer positioned to print onto the strip as it passes over the support with control means synchronising operation of the ink jet printer(s) with motion of the strip.

In order to hold the strip taut as it passes over the support, thereby ensuring close contact between the support and the strip, drives to advance the strip may act on it both before and after it passes over the support, while a control system regulates the tension in the strip by accelerating or retarding one or other drive relative to the other. The preferred form for such a drive is a pair of rollers forming a nip through which the strip passes, plus a motor driving one or both of these rollers.

A support over which the strip passes as it is printed is suitably provided by a wheel or a roller. This may conveniently be referred to as the "impression roller." The impression roller is preferably a wheel with an axial width not greater than that of the strip.

The means to monitor motion of the strip enables the control means to synchronise operation of the ink jet printer(s) with motion of the strip. This means to monitor motion may include a shaft encoder to provide signals as the impression roller turns. Such signals will of course indicate motion of the strip.

However, it is a preferred feature that the means for monitoring the motion of the strip operates by contacting or observing the face of the strip to which print is applied. By working off the face which actually receives print, any variation in the thickness of the strip is eliminated as a source of error.

Such means for monitoring motion may comprise a wheel or roller coupled to a shaft encoder and running on the exposed surface of the strip. Preferably this wheel or roller forms a nip with another wheel or roller in contact with the other face of the strip.

Yet again the means to monitor motion of the strip may comprise a sensor, such as a photocell, able to observe and detect markings already printed on the tape. Such a sensor would observe the face of the strip which receives print, without contacting it.

The printing operation is preferably carried out with the strip in continuous motion at a steady speed through the printing station.

After manufacture of tapes according to this invention, they will normally be fitted into outer cases which hold the tape coiled inside and have a mouth through which the tape can be drawn out. Such cases can be of conventional type. Tape measures, having such cases enclosing measuring tapes, are normally then enclosed in outer packaging for retail sale.

Embodiments of the invention are illustrated by the accompanying diagrammatic drawings in which:
Fig. 1 shows a first layout, and
Fig. 2 shows an alternative layout of drive and print stations.

As will be explained in more detail, each embodiment of apparatus has two electronic control systems, K1, K2. One controls operation of servo motors to transport a strip at constant speed. The other controls printing onto the strip. These two systems may be almost entirely separate, or may be integrated together to some extent - possibly even so far as sharing a single microprocessor.

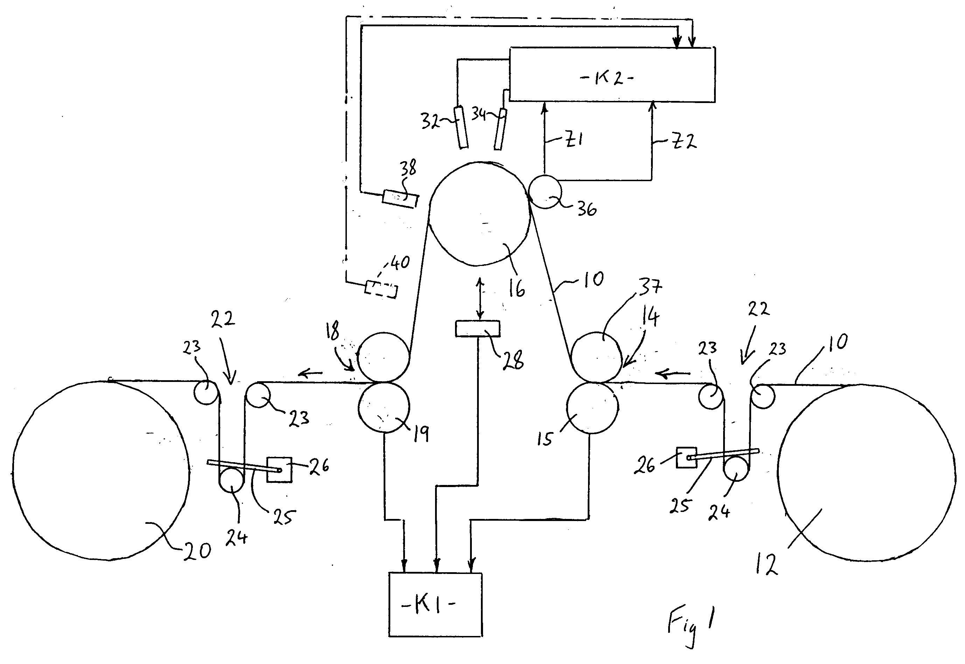

Referring to Figure 1, a length of strip material 10, intended to be printed with graduations and subsequently cut into individual tapes, is provided on a supply roller 12. The strip material is drawn off from this supply roller 12 between a pair of feed rollers 14, constituting a drive station, then passes over an idler wheel 16 which is the "impression roller" of a printing station and then between a second pair of feed rollers 18, which are a second drive station. The material then passes on and is wound up on a take-up roller 20. The take-up roller 20 is preferably driven as is the supply roller 12.

A conventional accumulator 22 is preferably provided between the supply roller 12 and the first drive station 14 with another accumulator 22 between the second drive station 18 and the take up roller 20.

The accumulators 22 each have a pair of rollers 23 on fixed axes and a so-called dancing roller 24 in the bight of strip between the rollers 23. This moves up or down as the quantity of strip in this bight between the rollers 23 decreases or increases.

Each dancing roller 24 is coupled by an arm 25 to a potentiometer 26. The potentiometer is connected to a speed control circuit regulating the speed of a conventional a.c. electric motor driving the adjacent roller 12 or 20 through a grear box. This control arrangement operates to keep the dancing roller 24 at a constant height.

This use of accumulators 22, which are well known per se, largely isolates the drive stations 14,18 from the rather massive rollers 12,20, which helps the drive stations to transport the strip material 10 at a steady speed.

The wheel 16 is mounted on a shaft which is free to rotate. A bearing for this shaft is supported by a load cell, indicated diagrammatically at 28, which gives an electrical output signal dependent on the load on the bearing. This serves to indicate the tension in the portion of the strip 10 running between the two drive stations. Measuring tension in this way is a known technique and a suitable load cell and associated circuitry is available from various manufacturers including Bofors Electronics Ltd, Bedford and Nobell Systems Ltd, also in Bedford.

The lower rollers 15,19 at each of the drive stations 14,18 are each driven by a respective servo motor whose speed can be accurately controlled. Each carries a shaft encoder. Signals from these encoders and from the load cell 28 are inputs to the electronic control system K1 for these servo motors. Alternatively the shaft encoders could be fitted to the upper, driven rollers at the drive stations.

This control system K1 drives the servo motors to accelerate the strip from a standing start to the intended operating speed. It then holds the speeds of the motors substantially constant during operation, but also effects slight adjustment of the speed of one or other pair of rollers 14,18 in order to keep the tension in the strip 10 (as detected by load cell 28) constant. This system for transporting and tensioning the strip 10 gives reproducible conditions for printing and greatly facilitates setting up a print run as well as facilitating accurate printing.

A pair of ink jet print heads 32,34 are positioned so as to be able to direct print onto the strip material 10 as it is passing over the wheel 16. The print head 32 is supplied with black ink and is used to print graduations on the tape, together with some of the numerals. The print head 34 is supplied with a red ink and is used to print other numerals. Each print head delivers minute droplets of ink onto the tape and each droplet forms a small dot. The dots are very closely spaced and the positions at which dots are printed is controlled so that the printed dots define graduations (lines) on the tape and numerals. Formation of lines and characters from patterns of dots is of course standard procedure for ink jet and other types of printer. It is preferred to utilise a printer capable of printing simultaneously from each of a row of jets, because this can print a line more readily than by use of a single jet which is deflected.

If desired, it would be possible to use only a single print head to print a single colour, e.g. if all numerals were black like the graduations.

A wheel 36 is positioned to bear on the exposed surface of the strip 10 as it runs over the wheel 16, but just before it passes beneath the ink jet print heads 32,34. This wheel 36 is coupled to a shaft encoder and the signals from it are an input (along line Z1) to a second control system K2 used to measure the motion of the strip and control the printers 32,34.

In an alternative arrangement, the wheel 36 is not used. Instead a shaft encoder is fitted to the upper, driven, roller 37 at the drive station 14. Signals from this encoder are taken to the control system K2 in the same way.

With both of these arrangements the shaft encoder is coupled to a wheel or roller which runs on that surface of the strip 10 which receives print and which forms a nip with another wheel or roller.

Signals from the encoder coupled to the wheel 36 or the roller 37 serve to signal the forward travel of the strip which is in contact with the wheel 16. Once in each revolutlon the encoder coupled to wheel 36 sends a "zero" signal. This is sent separately to the control system K2 along line Z2 and can be used to prevent cumulation of any errors in the signals given during the course of rotation or in counting such signals.

If desired a further encoder might be provided directly coupled to the wheel 16.

The control system K2 uses the signals from the shaft encoder (or encoders) as input and computes when the ink jet printers should direct their ink droplets onto the strip to print the required graduations and numerals.

A photoelectric sensor 38 is positioned to view the strip after printing. It detects the changes in the intensity of reflected light from the tape and thereby is able to detect the transitions from the background of the tape to each of the graduations printed onto it. In this way it is able to detect the leading and trailing edges of each graduation.

Because this sensor 38 reads directly from the tape it provides a check on the position of the printed graduations. The sensor 38 views a specific point on the path of the moving strip 10. It can observe the instant at which the leading and/or trailing edges of graduations appear at this point. The control system K2 which receives signals from the sensor 38 can check that edges appear at the instants predicted by the speed of the strip 10 (as determined from the shaft encoder signals) and the distance from the printing head 32. Alternatively it can check that the intervals between successive edges correspond to the speed of the strip 10.

In either case, if the control system detects a discrepancy, which signifies an error in printing, it can give an alarm and stop printing if the discrepancy exceeds a permissible tolerance. Alternatively or additionally, it can correct any discrepancies by making slight variation of the computed instants at which printing occurs, so as to give automatic regulation of the accuracy of printing.

Checking by means of the sensor 38 may monitor successive graduations on the tape, or may total the observed intervals between graduations over a larger length of tape to obtain a more accurate check.

A further possibility is to provide a second such sensor 40, as shown in phantom, and check that the instants at which edges of graduations appear corresponds to the distance between the two sensors 38,40.

When the control system K2 effects automatic regulation of printing by making adjustments in response to signals from the sensor 38 (or sensors 38,40) it may be possible to dispense with the wheel 36 and its shaft encoder. The control system K2 could initially compute the instants for printing on the basis that the strip 10 was travelling at a predetermined speed governed by the system K1 or a speed communicated from the system K1 to the system K2, and subsequently adjust in response to signals from the sensor(s) 38,40.

With any arrangement of the control system K2, no printing takes place while the drive system 14,18, K1 is accelerating from a standing start. Instead, when a constant speed is reached, the control system K1 gives a signal to the control system K2 to commence printing.

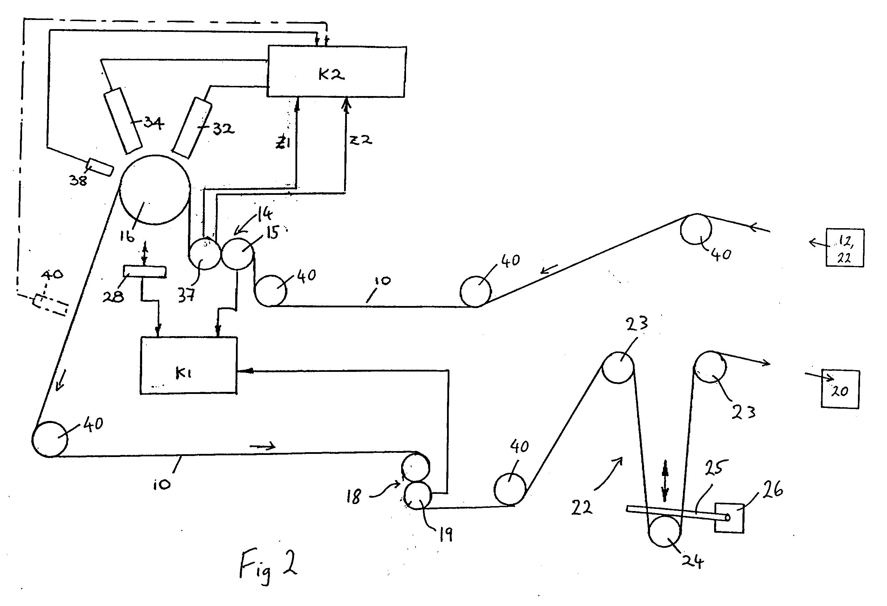

Referring next to Figure 2, this alternative layout is the same in principle and the same reference numerals are used to show the same parts.

The strip is again supplied from a roller 12 via an accumulator 22 as in Figure 1. Neither is included in this Figure. The strip is guided around idler rollers 40 to the drive station 14. After printing, it is guided by more idler rollers 40, first to drive station 18 and then via accumulator 22 to a take up roller 20 which is omitted from this Figure.

The drive stations 14,18 are oriented so that the strip 10 wraps around a grater arc of the rollers at these drive stations.

The encoder which provides signals on lines 71,72 to control system K2 is connected to roller 37 at drive station 14.

The materials which are employed may be conventional. The strip material can be steel strip, phosphated and coated with polyester base paint, as is currently used for tape measures. For long tape measures the strip material may be PVC coated fibreglass cloth, as is used at present.

The ink for the printers can be the same as is currently used for ink jet printing onto cardboard or plastic substrates. Typically it will contain volatile organic solvent, a polymeric resin and a dyestuff.

## Claims

1. A process for printing graduations onto a measuring tape comprising passing an elongate strip (10) through a printing station having a support (16) over which the strip passes, means to hold the strip taut as it passes over the support and means (36) for monitoring the amount of motion of the strip, monitoring and regulating the tension in the strip passing over the support, delivering print onto the strip by at least one ink jet printer (32,34) positioned to print onto the strip as it passes over the support with control means (K2) synchronizing operation of the ink jet printer(s) with motion of the strip.

2. A process according to claim 1 including driving the strip (10) before and after it passes over the said support (16) and regulating the tension in the strip passing over the support by adjusting the speed of the strip at one drive (15 or 19) relative to the speed at the other (19 or 15).

3. A process according to claim 2 wherein the tension is monitored by monitoring the load on the support (16).

4. A process according to any one of claims 1 to 3 wherein the support (16) is a wheel or roller.

5. A process according to any one of the preceding claims wherein the means (36) for monitoring the motion of the strip controls or observes the face of the strip to which print is applied.

## Patentansprüche

1. Verfahren zum Drucken von Skalenteilungen auf ein Meßband, umfassend das Hindurchführen eines länglichen Streifens (10) durch eine Druckstation mit einem Träger (16), über den der Streifen geführt wird, Mittel zum Gespannthalten des Streifens, während er sich über den Träger bewegt, und Mittel (36) zum Kontrollieren des Bewegungswerts des Streifens, das Kontrollieren und Regulieren der Spannung im über den Träger geführten Streifen, das Aufbringen des Aufdrucks auf den Streifen durch zumindest einen Tinten- bzw. Farbstrahldrucker (32, 34), der positioniert ist, den Streifen zu bedrucken, während er sich über den Träger bewegt, wobei ein Steuerungsmittel (K2) den Betrieb des/der Tinten- bzw. Farbstrahldrucker(s) mit der Bewegung des Streifens synchronisiert.

2. Verfahren nach Anspruch 1, umfassend das Antreiben des Streifens (10), bevor und nachdem er über den Träger (16) geführt wird, und das Regulieren der Spannung in dem sich über den Träger bewegenden Streifen durch das Einstellen der Geschwindigkeit des Streifens in einem Antrieb (15 oder 19) relativ zur Geschwindigkeit im anderen (19 oder 15).

3. Verfahren nach Anspruch 2, worin die Spannung durch das Überwachen der Last auf dem Träger (16) kontrolliert wird.

4. Verfahren nach einem der Ansprüche 1 bis 3, worin der Träger (16) ein Rad oder eine Rolle bzw. Walze ist.

5. Verfahren nach einem der vorhergehenden Ansprüche, worin das Mittel (36) zum Kontrollieren der Bewegung des Streifens die Vorderseite des Streifens überwacht oder beobachtet, auf die der Aufdruck aufgebracht wird.

## Revendications

1. Procédé pour imprimer des graduations sur un mètre à ruban comprenant les étapes consistant à faire passer une bande allongée (10) à travers une station d'impression possédant un support (16) sur lequel la bande passe, un moyen pour maintenir la bande à l'état tendu lorsqu'elle passe sur le support et un moyen (36) pour surveiller la quantité de mouvement de la bande, à surveiller et à régler la tension de la bande passant sur le support, à transmettre l'impression sur la bande par au moins une imprimante à jet d'encre (32, 34) positionnée pour imprimer sur la bande lorsqu'elle passe sur le support, avec un moyen de commande (K2) synchronisant le fonctionnement du ou des imprimante(s) à jet d'encre avec le mouvement de la bande.

2. Procédé selon la revendication 1, incluant l'étape consistant à entrainer la bande (10) avant et après son passage sur ledit support (16) et à régler la tension dans la bande passant sur le support en ajustant la vitesse la bande à un dispositif d'entraînement (15 ou 19) relativement à la vitesse à l'autre (19 ou 15).

3. Procédé selon la revendication 2, dans lequel la tension est surveillée en surveillant la charge sur le support (16).

4. Procédé selon l'une des revendications 1 à 3, dans lequel le support (16) est une roue ou un rouleau.

5. Procédé selon l'une des revendications précédentes, dans lequel le moyen (36) pour surveiller le mouvement de la bande contrôle ou observe la face de la bande sur laquelle l'impression est appliquée.
